# EUROPÄISCHE PATENTSCHRIFT

(11) **EP 0 874 295 B1**
(45) Veröffentlichungstag und Bekanntmachung des Hinweises auf die Patenterteilung: **29.01.2003**
(21) Anmeldenummer: 98106747.3
(22) Anmeldetag: 14.04.1998
(51) Int. Cl.: G05B 19/042

(54) **Verfahren und System zur chronologischen Sortierung von Prozesssignalen einer technischen Anlage**
Method and system for chronologically sorting process signals in a technical installation
Procédé et système pour trier chronologiquement les signaux de processus dans une installation industrielle

(30) Priorität: 23.04.1997 DE 19717156
(43) Veröffentlichungstag der Anmeldung: 28.10.1998
(73) Patentinhaber: SIEMENS AKTIENGESELLSCHAFT, 80333 München (DE)
(72) Erfinder: Bögge, Michael, Dipl.-Ing., 91080 Spardorf (DE); Kühne, Olaf, Dipl.-Ing., 91058 Erlangen (DE); Vielberg, Reinhard, Dipl.-Ing., 91330 Eggolsheim (DE); Hell, Wolfgang, 91220 Schnaittach (DE)

(56) Entgegenhaltungen:
- US-A- 5 351 202
- US-A- 5 479 361

## Beschreibung

Die Erfindung bezieht sich auf ein Verfahren zur chronologischen Sortierung von Prozeßsignalen einer technischen Anlage, insbesondere einer Kraftwerksanlage, bei dem in einem sogenannten Ringspeicher eine Vielzahl von Prozeßsignalen hinterlegt werden. Sie betrifft weiter ein nach diesem Verfahren arbeitendes System.

In einer Kraftwerksanlage soll ein Prozeßführungs- und Informationssystem, im weiteren Prozeßsystem genannt, die aktuellen Betriebszustände der Anlage erkennbar machen und Abweichungen von einem Sollzustand melden sowie Diagnosen von möglicherweise auftretenden Fehlern ermöglichen. Dazu ist eine umfangreiche Erfassung und Speicherung von die Betriebszustände aller Anlagenteile charakterisierenden Meßwerten und Meldesignalen erforderlich. Mit zunehmender Energie- und/oder Arbeitsausnutzung derartiger Kraftwerksanlagen und mit zunehmender Steigerung ihres Sicherheitsstandards wachsen auch die Anforderungen an das Prozeßsystem hinsichtlich der Verarbeitung, Speicherung, Analyse und Protokollierung großer Datenmengen.

Die Speicherung von zeitlichen Prozeßabläufen erfolgt üblicherweise durch chronologische Hinterlegung von aus Meßwerten und/oder Meldesignalen abgeleiteten Prozeßsignalen. Insbesondere zu Analyse- oder Diagnosezwecken können aus den gespeicherten Prozeßsignalen Protokolle oder Abbilder des in der Anlage ablaufenden Prozesses erstellt werden, die komplexe Zustände der Anlage zu vorgebbaren Zeitpunkten beschreiben. Da, insbesondere für Kraftwerksanlagen, derartige Diagnosen für jeden beliebigen Tag mindestens innerhalb der letzten zwei Jahre erstellbar sein sollen, müssen große Datenmengen zuverlässig hinterlegt werden. Zu diesem Zweck umfaßt das Prozeßsystem üblicherweise Umlaufpuffer oder Ringspeicher. Ein Ringspeicher kann dabei eine große Anzahl von Prozeßsignalen enthalten und einen zeitlichen Bereich von mehreren Tagen abdecken.

Aufgrund der hohen Komplexität einer großtechnischen Anlage umfaßt deren Automatisierungssystem üblicherweise eine Anzahl von dezentral angeordneten Datenverarbeitungseinheiten. Die Meßwerte und Meldesignale werden in den dezentralen Datenverarbeitungseinheiten erfaßt und aufbereitet. Dabei wird der Zeitpunkt der Erfassung jedes Meßwertes und jedes Meldesignales in der jeweiligen Datenverarbeitungseinheit zwischengespeichert. Anschließend werden die Meßwerte und Meldesignale mit den zugehörigen Zeitwerten als Prozeßsignale über einen Datenbus an das Prozeßsystem übertragen und dort zeitfolgerichtig hinterlegt.

Bei einem Ausfall einer Datenverarbeitungseinheit ist der Datenverkehr zum Prozeßsystem unterbrochen. Infolgedessen werden die Prozeßsignale bei Wiedereinschaltung der Datenverarbeitungseinheit nachträglich an das Prozeßsystem übertragen. Darüber hinaus kommt es durch Einkopplung von Daten aus Fremdsystemen (Datenverarbeitungseinheiten anderer Hersteller) oder durch fehlende Zeitsynchronisation zwischen den verschiedenen Datenverarbeitungseinheiten zwangsläufig zu zeitlichen Inkonsistenzen im Prozeßsignalstrom durch verspätete (nachträglich übertragene) Daten oder Prozeßsignale. Somit wird die Zeitfolgerichtigkeit aller Meßwerte und Meldesignale und der daraus resultierenden Prozeßsignale in dem Prozeßsystem aufgespalten.

Für zentrale Archivierungen, Analysen und Protokollierungen, beispielsweise Störfallanalysen und -protokollierungen, ist es jedoch notwendig, die Prozeßsignal zeitlich konstant aufsteigend und demzufolge zeitfolgerichtig archivieren, darstellen sowie protokollieren zu können. Bisher wurden dazu entweder zentrale Automatisierungs- und Archivierungssysteme eingesetzt, bei denen zeitliche Inkonsistenzen nicht auftraten, oder es wurden Sortierfunktionen zwischen die Automatisierungs- und der Archivierungsebene geschaltet. Mittels einer derartige Sortierfunktion ist eine schnelle sortierte Ausgabe aller zu berücksichtigender Prozeßsignale jedoch nicht möglich.

Aufgrund der Vielzahl von Meßdaten einer großtechnischen Anlage ist eine zeitfolgerichtige Sortierung und Archivierung aller auszuwertenden Prozeßsignale besonders aufwendig und zeitintensiv. Außerdem ist es bei vom Normalzustand abweichenden Anlagenzuständen, insbesondere bei Störfällen, notwendig, die Prozeßsignale in Form von Störungszustands- oder Meldungsablaufprotokolle schnellstmöglich, d.h. innerhalb von wenigen Sekunden, zeitfolgerichtig mit einer Zeitauflösung im Nanosekundenbereich auszugeben.

Der Erfindung liegt daher die Aufgabe zugrunde, ein Verfahren zur Sortierung von Prozeßsignalen einer technischen Anlage anzugeben, das in besonders einfacher Weise und besonders schnell unter Berücksichtigung aller erfaßten Meßwerte und Meldesignale eine zeitfolgerichtige Sortierung von Prozeßsignalen ermöglicht. Weiterhin soll ein zur Durchführung des Verfahrens besonders geeignetes System angegeben werden.

Die erstgenannte Aufgabe wird erfindungsgemäß gelöst, indem jedem durch den zeitlichen Ablauf eines Prozesses bestimmten Prozeßsignal ein den Zeitpunkt seiner Erfassung charakterisierendes Zeitmerkmal zugeordnet wird, wobei die in chronologischer Folge zu speichernden Prozeßsignale anhand des jedem Prozeßsignal zugrundeliegenden Zeitmerkmals über einen wählbaren Zeitbereich einer Prozeßsignalgruppe zugeordnet werden, wobei die Prozeßsignalgruppe aus einem Prozeßsignalstrom selektiert wird und die der Prozeßsignalgruppe zugehörigen Prozeßsignale stufenweise sortiert werden, und wobei über eine wählbare größte Zeitauflösung in einer ersten Stufe zeitfolgerichtig sortierte und hinterlegte Prozeßsignale über eine wählbare kleinste Zeitauflösung in einer zweiten Stufe weiter zeitfolgerichtig sortiert und hinterlegt werden.

Die Erfindung geht dabei von der Überlegung aus, daß für eine schnellstmögliche Sortierung und Archivierung eine Anzahl von aktuell erfaßten Prozeßsignalen anhand des jeweils zugehörigen Zeitmerkmals zusammengefaßt werden kann. Dabei ist eine Sortierung der zusammengefaßten Prozeßsignale nur solange erforderlich, bis die gewünschte Zeitauflösung, beispielsweise eine Zeitauflösung im Minuten-, Sekunden- oder Nanosekundenbereich, erzielt worden ist.

Zweckmäßigerweise wird jedes Prozeßsignal aus dem zeitlich unsortierten Prozeßsignalstrom gelesen und sortiert, wobei die sortierten Prozeßsignale anhand des jeweiligen Zeitmerkmals zeitlich aufsteigend miteinander verkettet werden. Durch eine derartige zeitfolgerichtige Verkettung der Prozeßsignale kann die Analyse irrelevanter Prozeßsignale umgangen werden, so daß das Auffinden der zu untersuchenden Prozeßsignale beschleunigt wird.

Um bei einer Protokoll- oder Analyseanforderung nur die für den angeforderten Zeitbereich relevanten sowie die nach einer geforderten Zeitauflösung sortierten Prozeßsignale auszugeben, werden vorzugsweise die verketteten und nach mindestens einer Sortierstufe sortierten Prozeßsignale nach einer weiteren Sortierstufe weiter sortiert und anschließend archiviert und/oder protokolliert. Zur Hinterlegung oder Speicherung umfaßt ein Archivspeicher eine Anzahl von Puffern, in denen die den Prozeßsignalgruppen zugeordneten Prozeßsignale zeitlich aufsteigend und entsprechend der bereits durchlaufenen Sortierstufen zeitgenau hinterlegt werden. Dabei werden die Puffer fortlaufend mit zeitlich aufsteigenden Prozeßsignalgrup-pen gefüllt. Mit anderen Worten: Die zeitlich ältesten Prozeßsignale werden der zeitlich ältesten Prozeßsignalgruppe zugeordnet und in den zeitrangmäßig entsprechenden Puffern des Archivspeichers hinterlegt.

Eine derartige, stufenweise Sortierung und anschließende Archivierung von Prozeßsignalen ermöglicht beispielsweise eine besonders schnelle Störfallanalyse, bei der die während des Störfalls erfaßten Prozeßsignale schnellstmöglich chronologisch ausgegeben werden. Dazu werden nur die diesem Störfall zugrundeliegenden Prozeßsignale ausgelesen und dargestellt. Dabei ist es hinreichend, daß diese Prozeßsignale chronologisch mit einer Zeitauflösung im Sekundenbereich ausgegeben werden. Je nach Anforderung werden nur diejenigen Puffer oder Teilarchive zum Auffinden der relevanten Prozeßsignale berücksichtigt, die der angeforderten Sortierstufe entsprechen. Durch ein derartiges Begrenzen des Suchbereiches in einem großen Archivspeicher oder Datenarchiv sind die Prozeßsignale schnell auffindbar und demzufolge schnellstmöglich ausgebbar.

Bezüglich des Systems wird die Aufgabe erfindungsgemäß gelöst
- mit einem Zwischenspeichermodul zur vorläufigen Speicherung einer Anzahl von Prozeßsignalen in der Reihenfolge ihres Eintreffens,
- mit einem an das Zwischenspeichermodul angeschlossenen Hauptspeicher zum zeitlich aufsteigenden Sortieren von Prozeßsignalen einer aus dem Zwischenspeichermodul über einen wählbaren Zeitbereich ausgelesenen Prozeßsignalgruppe, und mit einem an den Hauptspeichermodul angeschlossenen Verkettungsmodul zur Zuordnung der Position des zeitlich vorhergehenden und der Position des zeitlich nachfolgenden Prozeßsignals (PS) zu jedem Prozeßsignal.

Um eine schnellstmögliche Sortierung aller zu berücksichtigender Prozeßsignale mit einer sehr kleinen Zeitauflösung zu erzielen, ist dem Verkettungsmodul ein Sortierspeicher nachgeschaltet. Beispielsweise umfaßt der Sortierspeicher eine Anzahl von Puffern oder Teilarchiven, in denen die einen Zeitbereich repräsentierenden Prozeßsignalgruppen gemäß der entsprechenden oder bereits durchlaufenen Sortierstufe hinterlegt sind. Zur Archivierung oder zur Darstellung von Prozeßabläufen und -zuständen über einen wählbaren Zeitraum oder zur Erstellung von wählbaren chronologischen Protokollen ist dem Sortierspeicher ein Ausgabemodul nachgeschaltet. Beispielsweise umfaßt das Ausgabemodul einen Archivspeicher, einen Drucker oder ein Sichtgerät.

Die mit der Erfindung erzielten Vorteile bestehen insbesondere darin, daß durch eine stufenweise Sortierung der Prozeßsignale und durch die zeitlich aufsteigende Verkettung der Prozeßsignale sowie deren Hinterlegung in jeweils einen Zeitbereich repräsentierenden Prozeßsignalgruppen eine schnelle zeitfolgerichtige Archivierung, Darstellung und Protokollierung aller zu berücksichtigender Prozeßsignale gewährleistet ist.

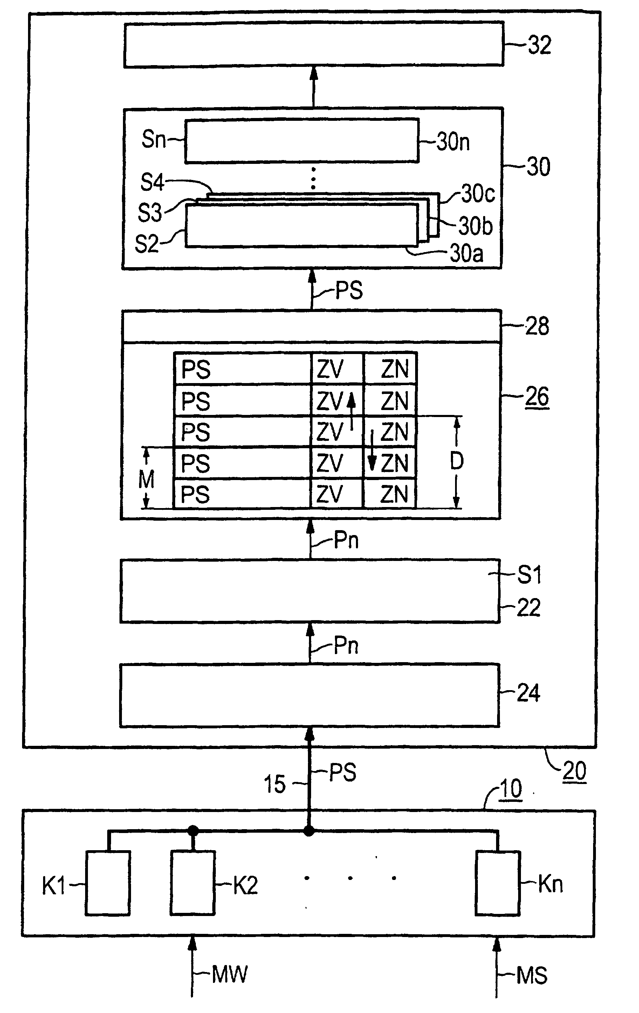

Nachfolgend wird ein Ausführungsbeispiel der Erfindung anhand der Zeichnung näher erläutert. Darin zeigt die Figur ein System mit zur Durchführung eines Verfahrens zur chronologischen Archivierung von Prozeßsignalen einer technischen Anlage vorgesehenen Komponenten.

Ein Automatisierungssystem 10 gemäß der Figur umfaßt eine Anzahl von Komponenten oder Datenverarbeitungseinheiten K1 bis Kn. In einer (nicht dargestellten) technischen Anlage erfaßte Meßwerte MW und/oder Meldesignale MS werden den zugehörigen Komponenten K1 bis Kn des Automatisierungssystems 10 zugeführt. In den jeweiligen Komponenten K1 bis Kn werden die Meßwerte MW und/oder Meldesignale MS vorverarbeitet und entsprechenden Prozeßsignalen PS zugeordnet. Dabei weist jedes Prozeßsignal PS eine Information über den Zeitpunkt der Erfassung sowie den numerischen Wert des zugrundeliegenden Meßwertes MW oder des Meldesignals MS auf. Die Prozeßsignale PS werden über ein Bussystem 15 einem zentralen Prozeßsystem 20 zugeführt, z.B. einem Prozeßführungs- und/oder Prozeßinformationssystem. Das Prozeßsystem 20 kann dabei insbesondere ein Personalcomputer oder eine andere Datenverarbeitungseinheit sein.

Das Prozeßsystem 20 umfaßt einen Hauptspeicher 22, an den eingangsseitig ein Zwischenspeichermodul 24 und ausgangsseitig ein Verkettungsmodul 26 angeschlossen sind. Wie in der Figur schematisch dargestellt, umfaßt das Verkettungsmodul 26 ein Verwaltungsmodul 28. Darüber hinaus ist das Verkettungsmodul 26 mit einem Sortierspeicher 30 verbunden, dem ein Ausgabemodul 32 nachgeschaltet ist.

Beim Betrieb des Prozeßsystems 20 wird eine Anzahl von Prozeßsignalen PS mit dem jeweils zugehörigen Zeitmerkmal sowie mit dem numerischen Wert in der Reihenfolge ihres Eintreffens im Zwischenspeichermodul 24 gespeichert. Das Zwischenspeichermodul 24, z.B. ein Ringspeichermodul, dient zur vorläufigen Speicherung der Prozeßsignale PS des Automatisierungssystems 10.

Bedingt durch einen Ausfall einzelner Komponenten K1 bis Kn des Automatisierungssystems 10 kann eine Unterbrechung des Datenverkehrs auf dem Bussystem 15 zwischen der gestörten oder ausgefallenen Komponente K1 bis Kn und dem Prozeßsystem 20 auftreten. Die während der Störung erfaßten Meßwerte MW und Meldesignale MS werden dann fortlaufend solange in der gestörten Komponente K1 bis Kn zwischengespeichert, bis der Datenverkehr zwischen der ausgefallenen Komponente Kn des Automatisierungssystems 10 und dem Prozeßsystem 20 wiederhergestellt ist.

Bei Wiedereinschaltung der gestörten Komponente K1 bis Kn und demzufolge bei Wiederherstellung des Datenverkehrs zwischen der Komponente K1 bis Kn und dem Prozeßsystem 20 werden die in der Komponente Kn zwischengespeicherten Meßwerte MW und Meldesignale MS mit dem Zeitpunkt ihrer Erfassung und ihrem numerischen Wert in Form von Prozeßsignalen PS an das Prozeßsystem 20 nachübertragen. Dabei können bei der Übertragung der Prozeßsignale PS von dem Automatisierungssystem 10 zu dem Prozeßsystem 20 sogenannte zeitliche Überholvorgänge auftreten, so daß die Zeitfolgerichtigkeit des im Zwischenspeichermodul 24 eintreffenden Prozeßsignalstromes aufgespalten wird. Eine Aufspaltung der Zeitfolgerichtigkeit kann beispielsweise auch durch eine fehlerhafte oder fehlende Zeitsynchronisation zwischen den Komponenten K1 bis Kn verursacht werden.

Für eine zeitfolgerichtige Archivierung oder Protokollierung der Prozeßsignale PS werden daher die zeitlich ältesten Prozeßsignale PS über einen wählbaren Zeitbereich tn, z.B. tn = 10s, als eine Prozeßsignalgruppe Pn oder ein Paket vom Hauptspeicher 22 aus dem Zwischenspeichermodul 24 ausgelesen. In dem Hauptspeicher 22 werden die der Prozeßsignalgruppe Pn zugehörigen Prozeßsignale PS in einer ersten Sortierstufe S1 zeitlich aufsteigend sekundengenau sortiert. Anschließend wird die Prozeßsignalgruppe Pn mit den sortierten Prozeßsignalen PS vom Verkettungsmodul 26 zur weiteren stufenweise Sortierung aus dem Hauptspeicher 22 ausgelesen.

In dem Verkettungsmodul 26 wird mittels des Verwaltungsmoduls 28 jeweils das zeitlich älteste Prozeßsignal PS der Prozeßsignalgruppe Pn ausgelesen und auf einem freien Speicherplatz im Verkettungsmodul 26 hinterlegt. Dabei ist das Verkettungsmodul 26 in der Art eines Bitmaps aufgebaut, d.h. jeder Speicherplatz entspricht einem Bit im Bitmap. Um die Zeitfolgerichtigkeit gewährleisten zu können, wird jedem Prozeßsignal PS jeweils ein Zeiger Zv zur Charakterisierung der Position des zeitlich vorhergehenden Prozeßsignals PS sowie ein Zeiger Zn zur Charakterisierung der Position des zeitlich nachfolgenden Prozeßsignales PS zugeordnet. Ein derartiges Verketten, insbesondere ein doppeltes Verketten, der Prozeßsignale PS erlaubt ein besonders schnelles Auffinden und Auslesen von über einen wählbaren Zeitbereich zu untersuchenden Prozeßsignalen PS. Darüber hinaus ist die Einsortierung nachfolgender vom Verwaltungsmodul 28 zu bearbeitender Prozeßsignale PS beschleunigt.

Je nach Anforderung der Protokollierung oder Archivierung werden die Prozeßsignale PS weiteren Sortierstufen S2 bis Sn des Sortierspeichers 30 zugeführt. Dazu wird in dem Verkettungsmodul 26 mittels des Verwaltungsmoduls 28 anhand des dem jeweiligen Prozeßsignal PS zugehörigen Zeitmerkmals geprüft, ob ein vorgebbarer Zeitbereich D, z.B. 10 Sekunden oder 1 Minute, zwischen dem zeitlich ältesten Prozeßsignal PS und dem zeitlich jüngsten Prozeßsignal PS überschritten ist. Diejenigen Prozeßsignale PS, deren Zeitmerkmal außerhalb des Zeitbereichs D liegen, werden dem Sortierspeicher 30 zugeführt. Mit anderen Worten: Diejenigen Prozeßsignale PS, deren Erfassung mehr als 10 Sekunden oder 1 Minuten zurückliegt, werden dem Sortierspeicher 30 zur weiteren Sortierung zugeführt. Dabei ist gewährleistet, daß stets eine Mindestanzahl von Prozeßsignalen PS und demzufolge ein Mindestzeitbereich M im Verkettungsmodul 26 zur Einsortierung weiterer Prozeßsignale PS vorhanden ist.

In dem Sortierspeicher 30 werden die sekundengenau sortierten Prozeßsignale PS weiteren Sortierstufen S2 und S3 zur millisekunden- oder nanosekundengenauen Sortierung zugeführt. Darüber hinaus sind weitere Sortierstufen S4 bis Sn möglich. Anschließend werden die in den jeweiligen Sortierstufen S1, S2 und S3 zeitfolgerichtig und zeitgenau sortierten Prozeßsignale PS dem Ausgabemodul 32 zur Archivierung oder zur Protokollierung zugeführt. Dabei werden je nach Anforderung der Archivierung oder der Protokollierung die zu berücksichtigenden Prozeßsignale PS gemäß der angeforderten Zeitauflösung aus dem die jeweilige Sortierstufe S1, S2 oder S3 repräsentierenden Speicher, d. h. aus dem Hauptspeicher 22, aus dem Sortierspeicher 30a bzw. aus dem Sortierspeicher 30b, ausgelesen.

Bedingt durch die stufenweise Sortierung der Prozeßsignale PS in den den jeweiligen Sortierstufen S1 bis Sn zugeordneten Speicherbereichen ist eine kontinuierliche Auswertung sichergestellt, beispielsweise in Form von zeitlich aufsteigenden konsistenten Protokollen, Kurvenauswertungen oder Archiven. Die kontinuierliche Sortierung gewährleistet darüber hinaus eine performante Auswertung, da Sortierungen nicht erst bei der Ausgabe erfolgen.

## Patentansprüche

1. Verfahren zur chronologischen Sortierung von Prozeßsignalen (PS) einer technischen Anlage, bei dem jedem durch den zeitlichen Ablauf eines Prozesses bestimmten Prozeßsignal (PS) ein den Zeitpunkt seiner Erfassung charakterisierendes Zeitmerkmal zugeordnet wird,
- wobei die in chronologischer Folge zu speichernden Prozeßsignale (PS) anhand des jedem Prozeßsignal (PS) zugrundeliegenden Zeitmerkmals über einen wählbaren Zeitbereich einer Prozeßsignalgruppe (Pn) zugeordnet werden,
- wobei die Prozeßsignalgruppe (Pn) aus einem Prozeßsignalstrom selektiert wird und die der Prozeßsignalgruppe (Pn) zugehörigen Prozeßsignale (PS) stufenweise sortiert werden, und
- wobei über eine wählbare größte Zeitauflösung in einer ersten Stufe zeitfolgerichtig sortierte und hinterlegte Prozeßsignale (PS) über eine wählbare kleinste Zeitauflösung in einer zweiten Stufe weiter zeitfolgerichtig sortiert und hinterlegt werden.

2. Verfahren nach Anspruch 1, bei dem die sortierten Prozeßsignale (PS) zeitlich aufsteigend miteinander verkettet werden.

3. Verfahren nach Anspruch 2, bei dem die verketteten und nach mindestens einer Sortierstufe (S1) sortierten Prozeßsignale (PS) nach einer weiteren Sortierstufe (S2, S3) weiter sortiert und anschließend archiviert und/oder protokolliert werden.

4. System zur chronologischen Sortierung von Prozeßsignalen (PS) einer technischen Anlage,
- mit einem Zwischenspeichermodul (24) zur vorläufigen Speicherung einer Anzahl von Prozeßsignalen (PS) in der Reihenfolge ihres Eintreffens,
- mit einem an das Zwischenspeichermodul (24) angeschlossenen Hauptspeicher (22) zum zeitlich aufsteigenden Sortieren von Prozeßsignalen (PS) einer aus dem Zwischenspeichermodul (24) über einen wählbaren Zeitbereich (tn) ausgelesenen Prozeßsignalgruppe (Pn), und
- mit einem an den Hauptspeichermodul (22) angeschlossenen Verkettungsmodul (26) zur Zuordnung der Position des zeitlich vorhergehenden und der Position des zeitlich nachfolgenden Prozeßsignals (PS) zu jedem Prozeßsignal (PS).

5. System nach Anspruch 4, wobei dem Verkettungsmodul (26) ein Sortierspeicher (30) nachgeschaltet ist.

6. System nach Anspruch 4 oder 5, bei dem dem Sortierspeicher (30) ein Ausgabemodul (32) zur Archivierung und/oder zur Erstellung von wählbaren chronologischen Protokollen aus den Prozeßsignalen (PS) nachgeschaltet ist.

## Claims

1. Method for chronologically sorting process signals (PS) of a technical installation, in which associated with each process signal (PS) determined by the chronological sequence of a process there is a time characteristic that characterises the time of its acquisition,
- wherein the process signals (PS) that are to be stored in chronological order are associated with a process signal group (Pn) with the aid of the time characteristic, which underlies each process signal (PS), over a selectable time range,
- wherein the process signal group (Pn) is selected from a process signal stream, and the process signals (PS) associated with the process signal group (Pn) are sorted in stages, and
- wherein process signals (PS) that are sorted and deposited over a selectable maximum time resolution in a first stage in correct chronological order are sorted and deposited over a selectable minimum time resolution in a second stage, further in correct chronological order.

2. Method according to claim 1, in which the sorted process signals (PS) are linked with each other in a temporally ascending manner.

3. Method according to claim 2, in which the process signals (PS) that are linked and sorted according to at least one sorting stage (S1) are sorted further according to a further sorting stage (S2, S3) and are subsequently archived and/or logged.

4. System for chronologically sorting process signals (PS) of a technical installation
- having an intermediate memory module (24) for temporarily storing a number of process signals (PS) in the sequence in which they arrive,
- having a main memory (22) that is connected to the intermediate memory module (24) for sorting in a temporally ascending manner process signals (PS) of a process signal group (Pn) that is read out from the intermediate memory module (24) over a selectable time range (tn), and
- having a linking module (26) connected to the main memory module (22) for associating the position of the temporally preceding process signal (PS) and the position of the temporally following process signal (PS) with each process signal (PS).

5. System according to claim 4, wherein a sorting memory (30) is connected downstream of the linking module (26).

6. System according to claim 4 or 5, in which an output module (32) is connected downstream of the sorting memory (30) for archiving and/or for creating selectable chronological logs from the process signals (PS).

## Revendications

1. Procédé de triage chronologique de signaux (PS) de processus dans une installation industrielle, dans lequel il est associé à chaque signal (PS) de processus déterminé par le déroulement dans le temps d'un processus une caractéristique temporelle caractérisant l'instant de sa détection,
- dans lequel les signaux (PS) de processus à mémoriser dans l'ordre chronologique sont associés, au moyen de la caractéristique temporelle, à la base de chaque signal (PS) de processus sur un domaine de temps que l'on peut choisir, à un groupe (Pn) de signaux de processus,
- dans lequel le groupe (Pn) de signaux de processus est sélectionné dans un courant de signaux de processus et les signaux (PS) de processus associés au groupe (Pn) de signaux de processus sont triés par étage, et
- dans lequel des signaux (PS) de processus triés correctement en succession dans le temps par une très grande résolution temporelle qui peut être sélectionnée dans un premier étage et mémorisée sont triés davantage d'une manière correcte en succession dans le temps par une résolution temporelle plus petite que l'on peut sélectionner dans un deuxième étage et sont mémorisés.

2. Procédé suivant la revendication 1, dans lequel les signaux (PS) de processus triés sont enchaînés les uns aux autres avec croissance dans le temps.

3. Procédé suivant la revendication 2, dans lequel les signaux (PS) de processus enchaînés et triés suivant au moins un étage (S1) de triage sont triés encore suivant un autre étage (S2, S3) de triage et ensuite sont archivés et/ou sont mis dans un procès-verbal.

4. Système de triage chronologique de signaux (PS) de processus dans une installation technique,
- comprenant un module (24) de mémoire tampon destiné à mémoriser temporairement un certain nombre de signaux (PS) de processus dans l'ordre de succession de leur apparition,
- comprenant une mémoire (22) principale raccordée au module (24) de mémoire tampon et destinée à trier de manière ascendante dans le temps des signaux (PS) de processus d'un groupe (Pn) de signaux de processus qui sont lus dans le module (24) de mémoire tampon sur un domaine (tn) de temps que l'on peut sélectionner, et
- comprenant un module (26) d'enchaînement raccordé au module (22) de mémoire principale et destiné à associer la position du signal (PS) de processus précédant dans le temps et la position du signal (PS) de processus venant ensuite dans le temps à chaque signal (PS) de processus.

5. Système suivant la revendication 4, dans lequel il est monté en aval du module (26) d'enchaînement une mémoire (30) de triage.

6. Système suivant la revendication 4 ou 5, dans lequel il est monté en aval de la mémoire (30) de triage un module (32) de sortie destiné à l'archivage et/ou à l'élaboration de procès-verbaux chronologiques qui peuvent être sélectionnés à partir des signaux (PS) de processus.
